Europäisches Patentamt

European Patent Office

Office européen des brevets

(19)

(11) **EP 1 122 588 A1**

(12) **EUROPEAN PATENT APPLICATION**

(43) Date of publication:
**08.08.2001 Bulletin 2001/32**

(51) Int Cl.$^7$: **G02F 1/1347**, G02F 1/1335

(21) Application number: **00300859.6**

(22) Date of filing: **03.02.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **Rolic AG**
**6301 Zug (CH)**

(72) Inventor: **The designation of the inventor has not yet been filed**

(74) Representative:
**Liebetanz, Michael, Dipl.-Phys. et al**
**Isler & Pedrazzini AG,**
**Patentanwälte,**
**Postfach 6940**
**8023 Zürich (CH)**

(54) **Colour switch**

(57)  A colour switch for selectively switching between colour bands for use in projection optics and in direct view optics has fewer and thinner layers than in the prior art, but exhibits equal or better colour purity and light efficiency. The filter has a first filter section (2-8) for selectively blocking green light and including a cholesteric filter (2), a quarter wave plate (4) and a liquid crystal switch (6). The filter has a second filter section (10-22) for selectively blocking blue and/or red light including a stack of retarder elements (10, 14, 16, 20) and liquid crystal switches (12, 18), preferably DHF switches. The parameters of the filter are determined by an optimisation process including minimising a cost function G with respect to the parameters of the second filter section.

**Fig. 6**

| Chol. Filter | λ/4 | DHF1 R ---- G —— B ---- | POL1 | R1 | DHF2 R G ---- B ---- | R2 | R3 | DHF3 R G ---- B ---- | R4 | POL2 |
|---|---|---|---|---|---|---|---|---|---|---|
| 2 | 4 | 6 | 8 | 10 | 12 | 14 | 16 | 18 | 20 | 22 |

EP 1 122 588 A1

**Description**

The present invention relates to a colour switch for selectively switching between different colour bands for use, for example, in projection optics and in direct view optics.

Colour switches based on retarders and liquid crystal (LC switches) are known and are shown for example in US-A-5,528,393. They are however difficult to produce. To get the desired steep spectral transmission curves requires a large number of retarders, which are expensive to produce. Another approach is to use retarders in high order (thick retarders with a retardation $\triangle n \cdot d \geq 2\lambda$, where d is the thickness, An the birefringence and $\lambda$ the wavelength of light). Since production variations of retarder thicknesses are usually proportional to the thickness, very tight tolerances are necessary to meet the required accuracy (which is typically $\pm$ 50 nm).

Colour switches based on cholesteric filters and LC switches (stacked band modulation filters, BMFs) are shown for example in US-A-4,726,663. These are less sensitive to manufacturing tolerances. The performance of these devices depends strongly on the birefringence An of the liquid crystal polymer (LCP) material used to produce the cholesteric filters in the BMFs. The most elegant approach is the incorporation of high-An materials ($\Delta n > 0.3$) into the filters, since then only 6 cholesteric layers (two for each colour) are required. However, cholesteric filters made from large $\Delta n$-materials exhibit strong side-lobes in their transmission spectra, reducing the overall transmission of the filter stack. Furthermore, high-An materials tend to absorb more light, especially in the blue region of the spectrum, limiting the lifetime in high-light-intensity applications such as projection systems. If low-An materials are used considerably more layers are required (e.g. for An = 0.12, six times more layers are necessary: three times more to cover the spectral range; since low-An materials also require much thicker layers, which cannot be produced in a single step, a further doubling of the layers results). A further drawback of stacked BMFs is their subtractive colour generation scheme: they divide the total spectrum in non-overlapping sub-spectra of the three primary colour R, G, B. While this leads to high colour purity, it is not the most light-efficient approach, because an overlap between 490 nm and 500 nm between the green and the blue spectra yields excellent colour saturation with significantly higher light throughput than non-overlapping configurations.

## Summary of the invention

The concept of the invention is to employ a cholesteric filter (more generally chiral filter) to selectively block one of the primary colours, and optimised retarder combinations are used to block the remaining primary colours. Such an arrangement provides a colour switch with fewer and thinner layers than in the prior art, but which exhibits equal or better colour purity and light efficiency. Thus, the invention combines the good properties of cholesteric filters (sharp spectra) with the good properties of birefringent filters (higher brightness than purely subtractive filters). Fewer layers implies fewer manufacturing steps; thinner layers implies less tight manufacturing tolerances.

The present invention provides in a first aspect a colour filter for switching between three different colour bands characterised by the combination of a first filter section for selectively blocking a first colour band and a second filter section for selectively blocking second and third colour bands;

the first filter section including a chiral filter means for reflecting one circularly polarised state of the first colour band and transmitting the other circularly polarised state;
and the second filter section including a combination of a plurality of retarder elements and a plurality of electrically controlled liquid crystal switches, arranged so as to be switchable between a first state in which both the second and third colour bands are blocked, a second state in which the second colour band is blocked, and a third state in which the third colour band is blocked.

The filter comprises a stack of elements, and preferably the chiral filter comprising the first filter section is placed at the front of the stack for the incoming light beam. Whilst it may be placed at the back of the stack, this may cause a reduced switching contrast because light reflected from the chiral filter may be re-reflected with reversed polarisation by the filter sections in front of the cholesteric filter.

The second filter section might in principle be constructed as two sub-sections, each sub-section acting on a respective primary colour band. However, in accordance with the invention it is preferred to use as switches in the second section, deformed helical ferroelectric switches (DHF). These have various variable parameters such as voltage dependent birefringence and dispersion, cell gap, orientation of optical axis. In addition, optical retarders have various parameters which may be varied, for example birefringence and dispersion, thickness and orientation. It is preferred in accordance with the invention rather than designing the second filter section separately for respective primary colour bands, to optimise the properties of the various elements of the second filter section bearing in mind its various parameters. This confers significant advantages in terms of overall thinness of the colour switch and excellent filter properties (sharp spectra, high brightness).

Thus in a further aspect, the invention provides, for a colour filter for selectively switching first, second and third colour bands, and including a first filter section for selectively blocking a first colour band, and a second filter section for selectively blocking at least a second colour band, the first and second sections including a combination of a plurality of retarder elements and electro-optic elements, a method of optimising the characteristics of the colour filter comprising

a. defining parameters of the elements of the first filter section to define the first colour band;
b. determining the variable parameters of the elements of the second filter section for optimisation;
c. minimising with respect to the parameters of the second filter section a cost function G:

$$G = \sum_{F=R,G,B} g_{1F} \left( (x_F - x_{F0})^2 + (y_F - y_{F0})^2 \right) + g_{2F} (Y_F - Y_{F0})^2$$

where $Y_F$ is brightness, and $x_F$, $y_F$ are the colour coordinates, $x_{FO}$, $y_{FO}$ and $Y_{FO}$ are respectively target values for colour coordinates brightness and wherein the parameters g are weight coefficients, including adjusting recursively the weights g of such that after optimisation the terms in G are of generally similar magnitude.

In regard to the first filter section, a quarter wave plate is used to convert the circularly polarised light of the primary colour component to linearly polarised light, and a liquid crystal switch in combination with a polarising sheet is employed to selectively switch the primary colour component. The liquid crystal switch either rotates the optical axis (such as a DHF cell) or switches between birefringent and non-birefringent state (such as a Pi-cell).

It will often be advantageous to choose for the cholesteric filter a selective reflection band that lies inside the overall colour spectrum. For an RGB system for instance green, which lies between red and blue, may be chosen since the sharp edge of the cholesteric filter spectrum on both sides can be used.

A colour switch according to the invention can be used in projection optics and in direct view optics. The display may consist either of a single pixel or a multitude of pixels, or of a combination of a "single pixel" colour switch with a pixellated (greyscale) display.

Advantageously, the liquid crystal elements of the colour filter, that is chiral filter, retarders and switches, are aligned by a photo-orientation technique. Among the different known methods particularly well suited will be those using linear photopolymerisation (LLP), also sometimes referred to as photooriented polymer network (PPN). Backgrounds and manufacturing of such elements are disclosed in, for example, US-A-5389698, US-A-5838407, US-A-5602661, EP-A-689084, EP-A-0756193, WO-A-99/49360, WO-A-99/64924, and International Application PCT/IB99/01938.

**Brief description of the drawings**

Preferred embodiments of the invention will now be described with reference to the accompanying drawings wherein:-

Figure 1 is a schematic view of a first embodiment of the present invention;

Figure 2 is a graph showing transmissivities for the primary light components, red, green and blue of the preferred embodiment;

Figure 3 is a chromaticity diagram showing the approximations provided by the preferred embodiment, to a NTSC TV system;

Figures 4 are graphs of values of birefringence for switches used in the preferred embodiment;

Figure 5 is a graph showing birefringence for LCP material used in retarders and filters of the preferred embodiment;

Figure 6 is an explanatory diagram showing the operation of the preferred embodiment of Figure 1;

Figure 7 is a second embodiment for the invention, modified as compared with Figure 1; and

Figure 8 is a sketch showing an aspect of the transmission characteristics of the filter of Figure 7.

### Description of the preferred embodiments

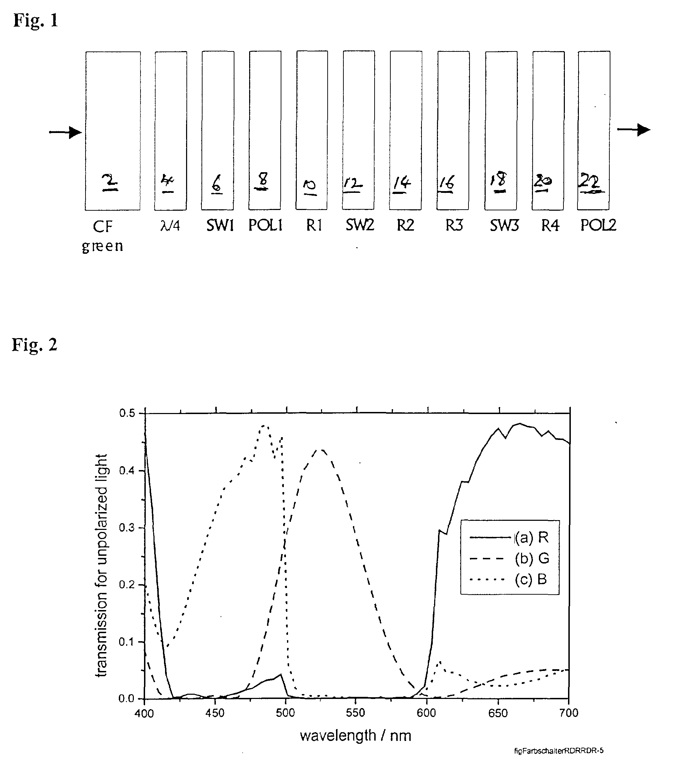

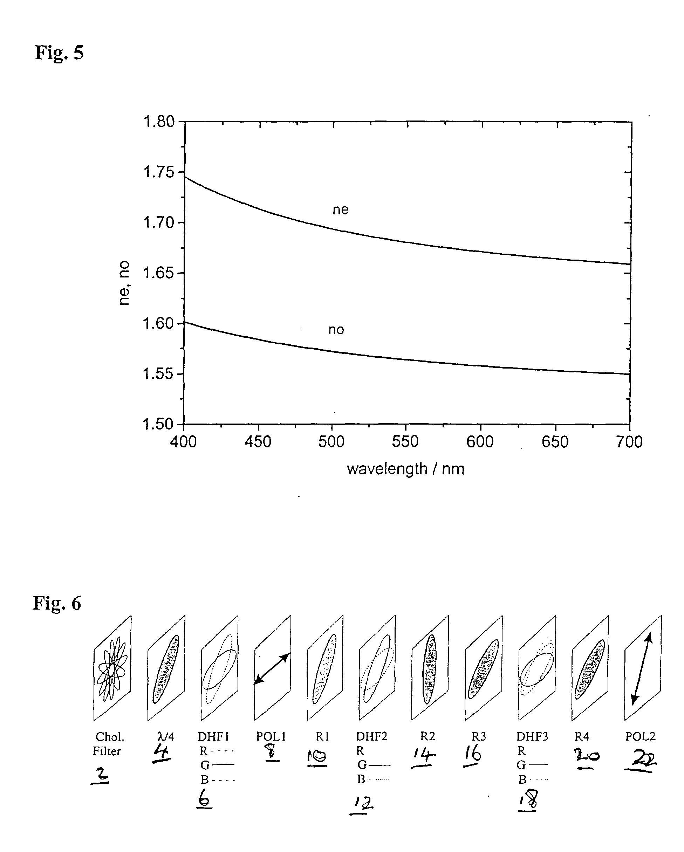

Figures 1 and 6 show schematically a colour switch forming a first embodiment of the invention. Light impinges from the left side and leaves the filter on the right side.

The filter is formed as a stack of elements, and the first element 2 is a cholesteric filter CF, which has its selective reflection band in the green region of the spectrum. This filter reflects in the reflection band one circular component of incident white light. The other circular component as well as essentially all light outside the selective reflection band is transmitted by CF.

The following retarder $\lambda/4$-plate 4 in the green transforms the green circularly polarised light into linearly polarised light. This $\lambda/4$-plate as well as the following DHF LC-switch 6 SW1 (DHF = deformed helix ferroelectric) leave the unpolarised light outside the selective reflection region essentially unchanged.

The SW1 switch 6 is configured as an $\lambda/2$-plate in the green with an optical axis that can be electrically rotated by 45°. In the R or B phase the optical axis is parallel to the linear polarisation of the green light. A polariser POL1 8 is oriented such that this polarisation is blocked. If the optical axis of the SW1-switch is now rotated electro-optically by 45°, the linear green component is rotated by 90° and essentially all of this green light is transmitted through the polariser.

The elements 2-8 form a first filter section for selectively blocking green light. The remaining components R1 (10) - SW2 (12) - R2 (14) - R3 (16) - SW3 (18) - R4 (20) - POL2 (22) form a second filter section for selectively blocking blue and red light. POL1 and POL2 denote linear polarisers; R1, R2, R3, and R4 are optical retarders; and SW2 and SW3 are DHF-switches. It has been found possible to suitably adapt the properties of these components to achieve a desired performance of the colour switch.

The parameters characterising the optical and electro-optical properties of these components are:

- material parameters:

    (i) birefringence and dispersion of the retarder material;
    (ii) birefringence and dispersion, as well as their voltage dependence, of the DHF-material;

- and for a given choice of the materials, the geometry may be optimised:

    (iii) cell gap of the DHF-switch as well as the orientation of the optical axis in the R,G,B periods, i.e. 4 Parameters per DHF-switch (note that the effective birefringence of the DHF-switch is voltage-dependent and that the range of angles the optical axis can have is limited);
    (iv) thickness and orientation of the retarders, i.e. 2 parameters per retarder; and
    (v) orientation of POL2 (one parameter).

The design of the first filter section is straightforward since all parameters characterising the first filter section are determined by the desired position and steepness of the filter, which position and steepness are pre-selected before other filter characteristics.

For the stack in Fig. 1 this results in 17 parameters which have to be optimised in accordance with the invention. Optimisation criteria are brightness and colour purity. This complex optimisation problem is not solvable by simple split-element considerations. It has been found that the optimum configuration depends on the choice of the importance of colour purity vs. the importance of light throughput, as well as on the range of retarder thicknesses chosen.

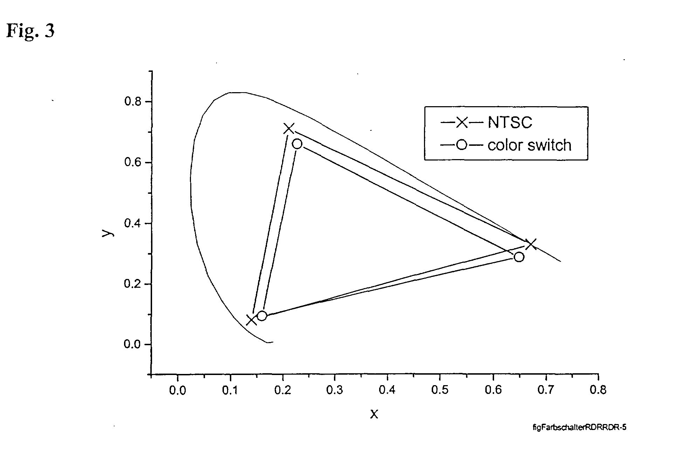

Fig. 2 shows examples of the transmission of an optimised configuration in the three switching states R,G,B. The high brightness (note that because of the polarizers, 0.5 is the theoretical maximum transmission) is evident, as well as the excellent colour coordinates (Fig. 3 - which show the colour switch of the invention as close to the NTSc colour values).

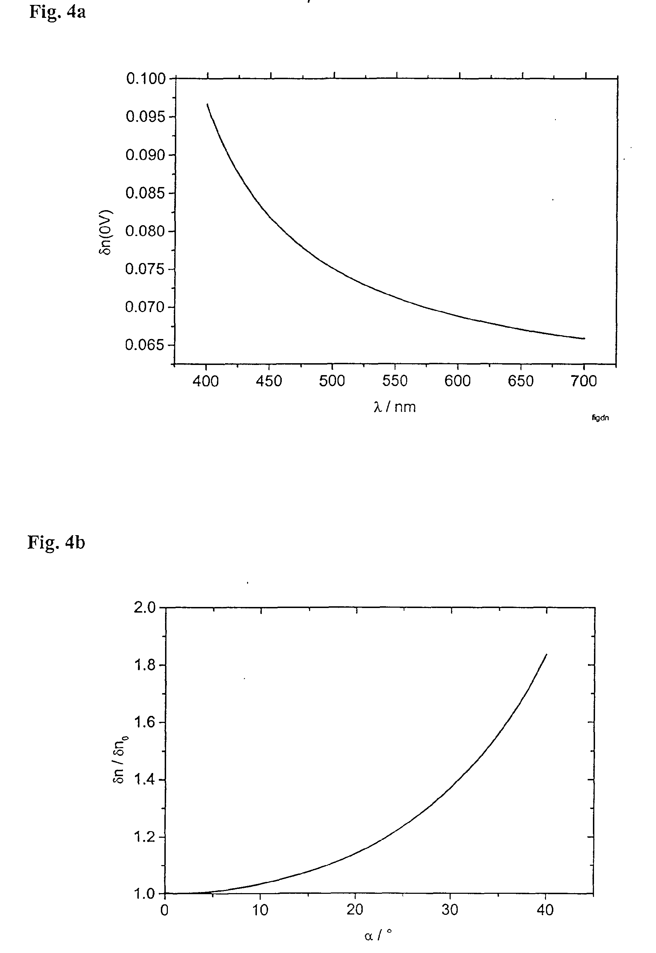

Table I lists the parameters used in the calculations. Fig. 4a shows the birefringence data $\Delta n(\lambda)$ of the DHF-LCDs, and the change of $\Delta n$ with increasing helix deformation (increasing voltage or increasing rotation angle $\alpha$ of the optical axis; see for instance J. Fünfschilling and M. Schadt, "New ferroelectric displays and operation modes," Ferroelectrics 1998, 213, p195-208, Figure 3 in particular) is shown in Fig. 4b. Finally, Fig. 5 shows the birefringence of the LCP material used for the retarders and the cholesteric filters.

Table I:

| Parameters of the colour switch of Figure 1 | | | | | | | |
|---|---|---|---|---|---|---|---|
| | R1 | SW2 | R2 | R3 | SW3 | R4 | POL2 |
| Thickness d / μ | 2.77 | 4.38 | 5.23 | 2.65 | 4.43 | 3.22 | |
| Retardation δn·d /μ @ 0V, 550nm | .323 | 0.312 | 0.610 | 0.310 | 0.315 | .375 | |
| $\alpha_{RETARDER}$ /° | 48.4 | | 85.8 | 26.5 | | 27.6 | |
| $\alpha_{SW, red}$ /° | | 36.0 | | | 35.7 | | |
| $\alpha_{SW, green}$ /° | | 42.6 | | | -9.3 | | |
| $\alpha_{SW, blue}$ /° | | 3.9 | | | 16.5 | | |
| $\alpha_{POL2}$ /° | | | | | | | 58.0 |
| centre wavelengths of the cholesteric filters: 520, 552, 580 nm | | | | | | | |

From the data in Table I it can be seen that the sum of the retardations of the retarder elements and of the liquid crystal switches is about two micrometers, which is an astonishing small value. This advantageously allows to make a switchable colour filter according to the invention using comparatively thin layers, which in particular show less absorption and are easier to produce, as shown the total thickness being about 23 μm. Preferably a colour filter according to any preceding claim wherein the second filter section is such that the sum of the retardations of the retarder elements and of the liquid crystal switches means is less than 5 micrometers, preferably less than 3 micrometers, and more preferably less than 2.5 micrometers.

All these birefringence data are fits to results of experiments with DHF and LCP materials. The cholesteric filter is built from three layers, each consisting of 15 windings of the cholesteric helix, with the centres of the selection bands at 520 nm, 552 nm and 580 nm. The calculations use a 4x4 matrix algorithm and simplex optimisation technique. The entrance and exit windows have antireflection coatings (modelled by a linear increase over 300 nm of the refractive index from n=1 to an average value $(n_e+n_o)/2$ of the refractive indices of the LCP). Loss-less polarisers are assumed.

In the optimisation routine the following cost function G is minimised:

1) Calculate the tristimulus-responses ($X_F$, $Y_F$, $Z_F$, $x_F$, $y_F$) for all 3 colours F = R,G,B, assuming a white (equal energy per nm bandwidth) light source. In a real application, advantageously the spectrum of the actual light source of the projection system should be used.

2) With the data calculate

$$G = \sum_{F=R,G,B} g_{1F}\, ((x_F - x_{F0})^2 + (y_F - y_{F0})^2) + g_{2F}(Y_F - Y_{F0})^2$$

and minimise G by with respect to the above listed parameters. $x_{FO}$ and $y_{FO}$ denote the target values x,y for the colour co-ordinates (taken as the NTSC colour co-ordinates in our example). The target values for the brightness, $Y_{F0}$ are determined from the brightness of an ideal colour filter. This ideal filter has a transmission of 1 in a given wavelength band and falls off to 0 over 10nm on each side. The bandwidths of the filter are chosen as wide as possible while still retaining the desired colour saturation. Note that for a specific design the actual lamp spectrum has to be employed in this calculation. The resulting brightness of the three colours of these ideal filters are used as target values for the colour switch. In our case, the values are 0.12, 0.25 and 0.05 for F= R, G, B respectively. The values of $Y_F$ should be larger than, but close to, the maximum that can be attained for each colour. Note that the maximum transmission is 0.5 due to the polarisers. The weight parameters g are chosen interactively, adjusted recursively, such that the size of corresponding terms in G after the optimisation are similar (within a factor of ten, preferably three).

A sketch illustrating the basic operation principle of the components of the colour switch for the three colour states is given in Figure 6. In this schematic representation the directions of the optical axes of the LC-switches are depicted according to table I in the R, G and B states.

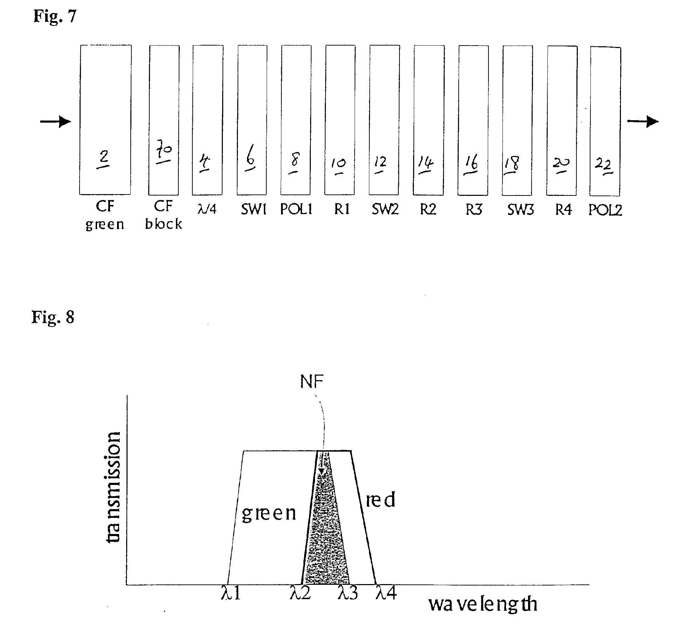

Fig. 7 shows a second embodiment of the invention, wherein similar parts are referred to by the same reference numerals . The difference relative to the colour switch of Fig. 1 is the additional cholesteric filter 'CF block' 70. This narrow-bandwidth ($\Delta n \approx 0.12$) filter has the opposite helix sense to the preceding 'CF green' filter 2. The effect of this filter is shown in Fig. 8. In the wavelength region λ2..λ3 (shaded region NF) the two cholesteric filters act as a blocking (notch) filter. This wavelength region is thus never transmitted, regardless of the switching states of the DHF-LCDs. Between λ3 and λ4 the circular polarisation opposite to the transmission of the green CF is transmitted. After the λ/4-plate this light is linearly polarised perpendicular to the polarisation of the green light between in the wavelength region λ1..λ2. Correspondingly, the light is transmitted in the non-green periods and blocked in the green period, making the green spectrum sharper by blocking unwanted red light. By this technique, selective wavelength regions (in the red as well as in the blue) can be blocked during the green period. This is important if the lamp used has strong emission lines that should be suppressed during the green period.

DHF-LCDs are well suited for these colour switches, because of their high speed switching capabilities and their analog electro-optic response. This analog response allows to switch between three states (equal duty cycle) and still employ dc-free driving voltages. This is achieved as follows:

If the calculations result in the three angles $\alpha_R$, $\alpha_G$ and $\alpha_B$ of the optical axes of the DHF-switch with the x-axis (= axis of the polariser POL1 in Fig. 1) for the three colours R, G and B, calculate $\alpha_0$ as $\alpha_0 = (\alpha_R + \alpha_G + \alpha_B)/3$. Choose the orientation of the DHF-switch such that the optical axis for 0 volts applied has an angle $\alpha_0$ to the x-axis. Because of the nearly linear dependence of the rotation angle of the optical axis on the applied voltage, the sum of the three voltages corresponding to $\alpha_R$, $\alpha_G$ and $\alpha_B$ is very close to zero, i.e. for constant duty-cycle switching, the switching is essentially dc-free. Note that a possible temperature dependence of the electro-optic response can be compensated for by the same argument with a suitable change of the driving amplitude, because the ratios of the three voltages remain constant.

However, the DHF-switches used in the configurations of Figs. 1 and 7 may be replaced by other types of fast LCD-switches, such as electroclinic, antiferroelectric, V-shaped antiferroelectric, bistable SSF, analogue driven SSF, and also nematic switches, such as TN or Pi-cell. In each case, the above optimisation procedure has to be repeated to find the optimum configuration.

Furthermore, the configurations of Figs. 1 or 7 may be modified in a straightforward way by adding or deleting some retarders. Deleting e.g. R2 still yields satisfactory colours, after re-optimising all the other parameters.

For the first polariser POL1 and/or POL2 advantageously also a non-absorbing brightness-enhancement foil (BEF) could be used. Such foils are available from 3M and are for instance described in US 5,962,114, J.M. Jonza et al, 3M Innovative Properties Company.

## Claims

1. A colour filter for switching between three different colour bands characterised by the combination of a first filter section (2-8) for selectively blocking a first colour band and a second filter section (10-22) for selectively blocking second and third colour bands:

   the first filter section including a chiral filter means (2) for reflecting one circularly polarised state of the first colour band and transmitting the other circularly polarised state;
   and the second filter section including a combination of a plurality of retarder elements (10, 14, 16, 20) and a plurality of electrically controlled liquid crystal switches (12, 18), arranged so as to be switchable between a first state in which both the second and third colour bands are blocked, and the first is transmitted, a second state in which the second colour band is blocked and the third is transmitted, and a third state in which the third colour band is blocked and the second is transmitted.

2. A colour filter according to Claim 1, wherein the first filter section includes a quarter wave plate (4) for transforming said transmitted circularly polarised state to linearly polarised light, a liquid crystal switch (6) configured as a half wave plate for the first colour band, and having an optical axis that can be electrically rotated for switching the linearly polarised light, and a linear polarising element (8)

3. A colour filter according to Claim 1, wherein the first filter section includes a quarter wave plate (4) and a liquid crystal switch (6) which in one electro-optic state acts as a half wave plate for the first colour band, and in another electro-optic state does not exhibit birefringence.

4. A colour filter according to any preceding claim including in the first filter section a blocking filter (70) for blocking a wavelength range between the first colour band and an adjacent second or third colour band.

5. A colour filter according to any preceding claim wherein the first colour band occupies a wavelength range between the second and third colour bands.

**6.** A colour filter according to any preceding claim, wherein the filter is configured as a stack of filter elements, and wherein the first filter section is positioned in front of the second filter section to receive incoming light.

**7.** A colour filter according to any preceding claim wherein the second filter section comprises, in sequence, a first retarder element, a first liquid crystal switch means, a second retarder element, a second liquid crystal switch, and a linearly polarising element.

**8.** A colour filter according to Claim 6, including a third retarder element between said second retarder element and the second liquid crystal switch.

**9.** A filter according to Claim 8, including a fourth retarder element disposed behind said second liquid crystal switch.

**10.** A colour filter according to any preceding claim wherein at least one of the aforementioned liquid crystal switches has at least three different electro-optic states.

**11.** A colour filter according to any preceding claim wherein at least one of the aforementioned liquid crystal switches are selected from the group: Deformed Helical Ferroelectric (DHF), electro-clinic, V-shaped anti-ferro electric, Pi-cell, SSF.

**12.** A colour filter according to Claim 11 wherein at least one of the liquid crystal switches is DHF.

**13.** A colour filter according to any preceding claim wherein the second filter section is such that the sum of the retardations of the retarder elements and of the liquid crystal switches means is less than 5 micrometers, preferably less than 3 micrometers, and more preferably less than 2.5 micrometers.

**14.** A colour filter according to any preceding claim wherein the retardations and orientations of the retarder elements and liquid crystal switches means of the second filter section have been selected by means of a minimising cost function G that uses weights yielding substantially similar terms describing the deviations of colour saturation and brightness from desired values.

**15.** A colour filter according to any preceding claim wherein the liquid crystal of at least one of the elements comprising liquid crystal is aligned by a photo-orientation technique.

**16.** For a colour filter for selectively switching first, second and third colour bands, and including a first filter section for selectively blocking a first colour band, and a second filter section for selectively blocking at least a second colour band, the first and second sections including a combination of a plurality of retarder elements and electro-optic elements,
   a method of optimising the characteristics of the colour filter comprising

   a. defining parameters of the elements of the first filter section to define the first colour band;
   b. determining the variable parameters of the elements of the second filter section for optimisation;
   c. minimising with respect to the parameters of the second filter section a cost function G:

$$G = \sum_{F=R,G,B} g_{1F} \left( (x_F - x_{F0})^2 + (y_F - y_{F0})^2 \right) + g_{2F} (Y_F - Y_{F0})^2$$

   where $Y_F$ is brightness, and $x_F$, $y_F$ are the colour coordinates, $x_{FO}$, $y_{FO}$ and $Y_{FO}$ are respectively target values for colour coordinates and brightness and wherein the parameters g are weight coefficients, including adjusting recursively the weights g of such that after optimisation the terms in G are of generally similar magnitude.

**17.** A method according to Claim 16, wherein after optimisation, the terms

$$g_{1F} \cdot \left( (x_F - x_{F0})^2 + (y_F - y_{F0})^2 \right)$$

and $g_{2F} \cdot (Y_F - Y_{F0})^2$ in G are similar within a factor of 10, preferably a factor of 3.

Fig. 1

| CF green | λ/4 | SW1 | POL1 | R1 | SW2 | R2 | R3 | SW3 | R4 | POL2 |

Fig. 2

figFarbschalterRDRRDR-5

**Fig. 3**

figFarbschalterRDRRDR-5

Fig. 4a

Fig. 4b

## Fig. 5

## Fig. 6

| Chol. Filter | λ/4 | DHF1 R - - - - G —— B - - - - | POL1 | R1 | DHF2 R G —— B · · · · · · | R2 | R3 | DHF3 R G —— B · · · · · | R4 | POL2 |
| --- | --- | --- | --- | --- | --- | --- | --- | --- | --- | --- |
| 2 | 4 | 6 | 8 | 10 | 12 | 14 | 16 | 18 | 20 | 22 |

**Fig. 7**

| | | | | | | | | | | | |
|---|---|---|---|---|---|---|---|---|---|---|---|
| 2 | 70 | 4 | 6 | 8 | 10 | 12 | 14 | 16 | 18 | 21 | 22 |
| CF green | CF block | λ/4 | SW1 | POL1 | R1 | SW2 | R2 | R3 | SW3 | R4 | POL2 |

**Fig. 8**

NF

transmission

green    red

λ1    λ2    λ3    λ4

wavelength

European Patent Office

**EUROPEAN SEARCH REPORT**

Application Number

EP 00 30 0859

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 822 021 A (SALERNO JACK P ET AL) 13 October 1998 (1998-10-13) * column 3, line 62 - column 4, line 65; figure 2A * | 1,13 | G02F1/1347 G02F1/1335 |
| A | US 5 619 355 A (SHARP GARY D ET AL) 8 April 1997 (1997-04-08) * abstract * * column 3, line 26 - line 67 * | 1,11,12 | |
| D,A | US 5 528 393 A (SHARP GARY D ET AL) 18 June 1996 (1996-06-18) * column 2, line 29 - column 3, line 58 * | 1 | |
| D,A | US 4 726 663 A (BUZAK THOMAS S) 23 February 1988 (1988-02-23) * column 1, line 31 - column 2, line 39 * | 1 | |
| D,A | FÜNFSCHILLING J ET AL: "NEW FERROELECTRIC DISPLAYS AND OPERATION MODES" FERROELECTRICS,US,NEW YORK, NY, vol. 213, 1998, pages 195-208, XP000901788 * figure 3 * | 16 | TECHNICAL FIELDS SEARCHED (Int.Cl.7) G02F |

The present search report has been drawn up for all claims

| Place of search | Date of completion of the search | Examiner |
|---|---|---|
| THE HAGUE | 16 June 2000 | Gill, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 00 30 0859

This annex lists the patent family members relating to the patent documents cited in the above–mentioned European search report.
The members are as contained in the European Patent Office EDP file on
The European Patent Office is in no way liable for these particulars which are merely given for the purpose of information.

16-06-2000

| Patent document cited in search report | | Publication date | Patent family member(s) | | Publication date |
|---|---|---|---|---|---|
| US 5822021 | A | 13-10-1998 | AU | 3128797 A | 05-12-1997 |
| | | | EP | 0898841 A | 03-03-1999 |
| | | | WO | 9743862 A | 20-11-1997 |
| | | | US | 5929946 A | 27-07-1999 |
| | | | US | 5999240 A | 07-12-1999 |
| | | | US | 5990996 A | 23-11-1999 |
| | | | US | 6049367 A | 11-04-2000 |
| US 5619355 | A | 08-04-1997 | AU | 7968094 A | 01-05-1995 |
| | | | CA | 2173586 A | 13-04-1995 |
| | | | CN | 1132556 A | 02-10-1996 |
| | | | EP | 0746793 A | 11-12-1996 |
| | | | WO | 9510065 A | 13-04-1995 |
| US 5528393 | A | 18-06-1996 | US | 5381253 A | 10-01-1995 |
| | | | US | 5469279 A | 21-11-1995 |
| | | | US | 5231521 A | 27-07-1993 |
| | | | US | 5243455 A | 07-09-1993 |
| | | | AU | 664402 B | 16-11-1995 |
| | | | AU | 3072692 A | 15-06-1993 |
| | | | CA | 2123310 A | 27-05-1993 |
| | | | EP | 0612415 A | 31-08-1994 |
| | | | JP | 7504994 T | 01-06-1995 |
| | | | US | 5493426 A | 20-02-1996 |
| | | | WO | 9310477 A | 27-05-1993 |
| | | | US | 5552912 A | 03-09-1996 |
| | | | WO | 9323786 A | 25-11-1993 |
| | | | WO | 9402879 A | 03-02-1994 |
| | | | CA | 2071870 A | 01-05-1991 |
| | | | EP | 0500683 A | 02-09-1992 |
| | | | JP | 2971945 B | 08-11-1999 |
| | | | JP | 5505245 T | 05-08-1993 |
| | | | WO | 9106888 A | 16-05-1991 |
| | | | US | 5132826 A | 21-07-1992 |
| | | | US | 5168381 A | 01-12-1992 |
| US 4726663 | A | 23-02-1988 | JP | 2012707 C | 02-02-1996 |
| | | | JP | 7034078 B | 12-04-1995 |
| | | | JP | 63132218 A | 04-06-1988 |

EPO FORM P0459

For more details about this annex : see Official Journal of the European Patent Office, No. 12/82